# EUROPEAN PATENT APPLICATION

(11) **EP 3 547 126 A1**
(43) Date of publication of application: **02.10.2019**
(21) Application number: 19165727.9
(22) Date of filing: 28.03.2019
(51) Int. Cl.: G06F 9/48, G06F 9/50, H04L 12/24, G06F 9/455

(54) **INSIGHT FOR CLOUD MIGRATION AND OPTIMIZATION**

(30) Priority: 29.03.2018 US 201815939743
(71) Applicant: Servicenow, Inc., Santa Clara, California 95054 (US)
(72) Inventor: WIENER, David Joshua, Santa Clara, CA 95054 (US); ARAD, Moshe, Santa Clara, CA 95054 (US); PINCHOVSKI, Barak, Santa Clara, CA 95054 (US)
(74) Representative: Boult Wade Tennant LLP

(57) **Abstract**

A service group is identified within an enterprise, wherein the service group comprises at least one or more applications and one or more hosts configured to work together to offer a service to the enterprise. The service group may be periodically (or in response to certain conditions being met) evaluated for potential cloud migration or (e.g., in the event the service group has already been migrated to the cloud) further optimization, wherein the evaluation comprises: determining a current allocation efficiency score for the service group; and then obtaining one or more allocation efficiency score estimates from one or more cloud providers, wherein the estimates correspond to the current allocation efficiency score for the service group. Recommendations, including migration likelihood scores, may be presented to a user for the migration and/or further optimization of the service group by migrating the service group to one (or more) of the recommended cloud providers.

## Description

### TECHNICAL FIELD

Embodiments described herein generally relate to the analysis of service groups (e.g., collections of one or more applications and one or more hosts configured to work together to offer a service to an enterprise) located in private or public clouds. More particularly, the embodiments described herein relate to determining the efficiency of the resources currently allocated to the service groups and providing real-time recommendations to the enterprise regarding the migration of all (or a part) of one or more of the service groups into specific public clouds, in order to result in a more efficient allocation of the enterprise's resources.

### BACKGROUND

Cloud computing relates to the sharing of computing resources that are generally accessed via the Internet. In particular, cloud computing infrastructure allows users to access a shared pool of computing resources, such as servers, storage devices, networks, applications, and/or other computing-based services. By doing so, users, such as individuals and/or enterprises, are able to access computing resources on demand that are located at remote locations, in order to perform a variety of computing functions that include storing and/or processing computing data. For enterprise and other organizational users, cloud computing provides flexibility in accessing cloud computing resources without accruing up-front costs, such as purchasing network equipment and investing time in establishing a private network infrastructure. Instead, by utilizing cloud computing resources, users are able redirect their resources to focus on core enterprise functions.

In today's communication networks, examples of cloud computing services a user may utilize include software as a service (SaaS) and platform as a service (PaaS) technologies. SaaS is a delivery model that provides software as a service, i.e., rather than an end product. Instead of utilizing local network or individual software installations, software is typically licensed on a subscription basis, hosted on a remote machine, and accessed as needed. For example, users are generally able to access a variety of enterprise and/or information technology (IT) related software via a web browser. PaaS acts as an extension of SaaS that goes beyond providing software services by offering customizability and expandability features to meet a user's needs. For example, PaaS can provide a cloud-based developmental platform for users to develop, modify, and/or customize applications and/or automate enterprise operations without maintaining network infrastructure and/or allocating computing resources normally associated with these functions.

While the benefits provided by cloud computing are numerous-and increasingly important-in the modern computing landscape, it can often be overwhelming when an enterprise or other organization first attempts to "migrate" some or all of its hosted services and applications from the "private" cloud (i.e., computing resources hosted by the enterprise itself) to the "public" cloud (i.e., computing resources hosted by a third party). Specifically, because enterprises are often comprised of a very large number of individual components, e.g., machines, hosts, servers, databases, websites, applications, etc. (which components may also be referred to and identified as "Configuration Items" or "CIs," e.g., when stored in a Configuration Management Database (CMDB)), it can be a daunting task for the enterprise's IT department to determine which components of the enterprise can safely be migrated to the public cloud (and when), e.g., without causing security or interdependency issues for the enterprise. Further, it can be difficult to determine when and where the enterprise's limited resources should be spent/allocated on cloud computing services, in order to return the greatest benefit to the enterprise.

Thus, there is need for intelligent systems and methods to provide real-time determinations of the allocation efficiency of the enterprise's resources at the "service group"-level within the enterprise (i.e., as opposed to at the level of individual CIs or system components), as well as real-time recommendations of migration and/or optimization strategies, to help the enterprise allocate its resources among one or more public cloud service providers in a more efficient manner.

### SUMMARY

The following presents a simplified summary of the disclosed subject matter in order to provide a basic understanding of some aspects of the subject matter disclosed herein. This summary is not an exhaustive overview of the technology disclosed herein. It is not intended to identify key or critical elements of the invention or to delineate the scope of the invention. Its sole purpose is to present some concepts in a simplified form as a prelude to the more detailed description that is discussed later.

In one embodiment, a method includes: identifying a first service group operated by an enterprise for potential migration to a public cloud, wherein the first service group comprises at least one or more applications and one or more hosts configured to work together to offer a service to the enterprise. Once the first service group has been identified, it may be evaluated for potential migration to a public cloud, e.g., by performing the following operations: determining a current allocation efficiency score for the first service group; determining a migration likelihood score for the first service group (wherein the migration likelihood score comprises a computed estimate of the likelihood that the enterprise might be interested in migrating the respective service group to the public cloud); obtaining allocation efficiency score estimates from one or more cloud service providers, wherein the obtained allocation efficiency score estimates correspond to the determined current allocation efficiency score for the first service group; and then recommending a migration of the first service group to at least one of the one or more cloud service providers for which allocation efficiency score estimates were obtained. In some embodiments, the recommendations may be accompanied with the respective current allocation efficiency scores and/or the respective migration likelihood scores for each respective service group. Upon receiving a selection of at least one of the recommended one or more cloud service providers to serve as a new host for the first service group, the method may then migrate some or all of the components of the first service group to the selected one or more cloud service providers.

In some embodiments, the method may further comprise determining a migration likelihood score for each respective service group based on considering the service group's current allocation efficiency score and one or more additional factors, such as: latency implications of migrating the service group to a particular cloud service provider; security implications of migrating the service group to a particular cloud service provider; implications of migrating the service group to a particular cloud service provider based on a historical use over time of the cloud service provider by the enterprise itself (or other similarly-situated enterprises); implications of a partial migration of the service group to a particular cloud service provider (i.e., implications of creating a 'hybrid' public/private service group); efficiency implications of migrating the service group to a particular cloud service provider; and the likelihood of other similarly-situated enterprises to want to migrate the service group to a particular cloud service provider (e.g., via the use of a collaborative filtering process).

In other embodiments, the act of recommending one or more cloud service providers to the enterprise for migration may be performed: continuously, at a periodic interval, at an irregular interval, or in response to a certain condition being met (e.g., a statistical outlier event being registered in the system, or a certain threshold of acceptable levels of some system variable(s) being exceeded).

In still other embodiments, the method may further comprise optimizing the hosting of the first service group by the selected at least one of the recommended one or more cloud service providers. For example, according to some such embodiments, the optimization may comprise: splitting one host device into two or most host devices, e.g., so as to better load balance the host devices in the service group; adding a new host device, e.g., so that two different service groups do not each utilize the same host device; decommissioning, downsizing, or modifying an operational metric of one or more host devices, e.g., an amount of RAM, processor speed, etc.; and/or moving all the host devices for a given service group into the public cloud, e.g., in instances where the service group was previously a 'hybrid' service group having components in both a private cloud and the public cloud.

In yet other embodiments, the methods outlined above may be embodied in computer executable program instructions and stored in a non-transitory computer-readable medium. In yet other embodiments, the method may be implemented by one or more hardware processors of a computer system having a user interface.

### BRIEF DESCRIPTION OF DRAWINGS

For a more complete understanding of this disclosure, reference is now made to the following brief description, taken in connection with the accompanying drawings and detailed description, wherein like reference numerals represent like parts.
FIG. **1** illustrates a block diagram of a cloud computing infrastructure, where one or more embodiments of the present disclosure may operate.
FIG. **2** illustrates a block diagram of a multi-instance cloud architecture, where one or more embodiments of the present disclosure may operate.
FIG. **3** illustrates a high-level block diagram of a processing device (i.e., computing system) that may be used to implement one or more embodiments of the present disclosure.
FIG. **4** illustrates a flow chart of a method for providing insights related to the migration or optimization of cloud computing services for an enterprise, according to one or more embodiments of the present disclosure.
FIG. **5** illustrates a flow chart of a method for providing migration likelihood scores for a service group, according to one or more embodiments of the present disclosure.
FIG. **6** illustrates a block diagram of an exemplary recommended cloud migration process, according to one or more embodiments of the present disclosure.
FIG. **7** illustrates a block diagram of another exemplary recommended cloud migration process, according to one or more embodiments of the present disclosure.
FIG. **8** illustrates a block diagram of yet another exemplary recommended cloud migration process, according to one or more embodiments of the present disclosure.
FIG. **9** illustrates a block diagram of still another exemplary recommended cloud migration process, according to one or more embodiments of the present disclosure.
FIG. **10** illustrates a user interface for a service group migration and/or optimization recommendation engine, according to one or more embodiments of the present disclosure.
FIG. **11** illustrates various user interfaces for service group migration and/or optimization selection, according to one or more embodiments of the present disclosure.

### DESCRIPTION OF EMBODIMENTS

In the following description, for purposes of explanation, numerous specific details are set forth in order to provide a thorough understanding of the embodiments disclosed herein. It will be apparent, however, to one skilled in the art that the disclosed embodiments may be practiced without these specific details. In other instances, structure and devices are shown in block diagram form in order to avoid obscuring the disclosed embodiments. Moreover, the language used in this disclosure has been principally selected for readability and instructional purposes, and may not have been selected to delineate or circumscribe the inventive subject matter, resorting to the claims being necessary to determine such inventive subject matter. Reference in the specification to "one embodiment" or to "an embodiment" means that a particular feature, structure, or characteristic described in connection with the embodiments is included in at least one embodiment.

The terms "a," "an," and "the" are not intended to refer to a singular entity unless explicitly so defined, but include the general class of which a specific example may be used for illustration. The use of the terms "a" or "an" may therefore mean any number that is at least one, including "one," "one or more," "at least one," and "one or more than one." The term "or" means any of the alternatives and any combination of the alternatives, including all of the alternatives, unless the alternatives are explicitly indicated as mutually exclusive. The phrase "at least one of' when combined with a list of items, means a single item from the list or any combination of items in the list. The phrase does not require all of the listed items unless explicitly so defined.

The term "computing system" is generally taken to refer to at least one electronic computing device that includes, but is not limited to a single computer, virtual machine, virtual container, host, server, laptop, and/or mobile device or to a plurality of electronic computing devices working together to perform the function described as being performed on or by the computing system.

As used herein, the term "medium" refers to one or more non-transitory physical media that together store the contents described as being stored thereon. Embodiments may include non-volatile secondary storage, read-only memory (ROM), and/or random-access memory (RAM).

As used herein, the term "application" refers to one or more computing modules, programs, processes, workloads, threads and/or a set of computing instructions executed by a computing system. Example embodiments of an application include software modules, software objects, software instances and/or other types of executable code.

As used herein, the term "service group" refers to one or more applications and one or more hosts configured to work together to offer a service to an enterprise. The CIs (i.e., individual components) making up a service group may all be related to each other in the enterprise system. As will be explained in greater detail below, the CIs for a given service group don't have to be hosted together in the same cloud, but, in some instances, it may be optimal them to all be hosted in the same cloud. Exemplary components of a service group may include: the group of related computing modules, programs, processes, computing systems, and/or storage media that are used by the enterprise to provide a service of value to the enterprise. Examples of services provided by a service group may include, e.g.: email services, Internet access, the hosting of a Website, or the hosting of a particular enterprise application, etc.

The disclosure pertains to systems, methods, and computer-readable media configured to identify a service group within an enterprise, wherein the service group may comprise at least one or more applications and one or more hosts configured to work together to offer a service to the enterprise. The service group may be periodically (or in response to certain conditions being met) evaluated for potential cloud migration or (e.g., in the event the service group has already been migrated to the cloud) further optimization, wherein the evaluation comprises: determining a current allocation efficiency score for the service group; determining a migration likelihood score for the service group; and then obtaining one or more allocation efficiency score estimates from one or more cloud providers, wherein the estimates correspond to the current allocation efficiency score for the service group.

Recommendations, including the determined migration likelihood scores, i.e., scores indicating the likelihood that a user would be interested in migrating the service group to a particular one or more of the cloud providers from which estimates have been obtained, may then be presented to the user, e.g., via a graphical user interface. The user may then select which, if any, of the recommended cloud providers they would like to migrate the service group to and/or which, if any, of the recommended ways to further optimize the service group's performance, e.g., by utilizing a different cloud computing configuration, they are interested in pursuing.

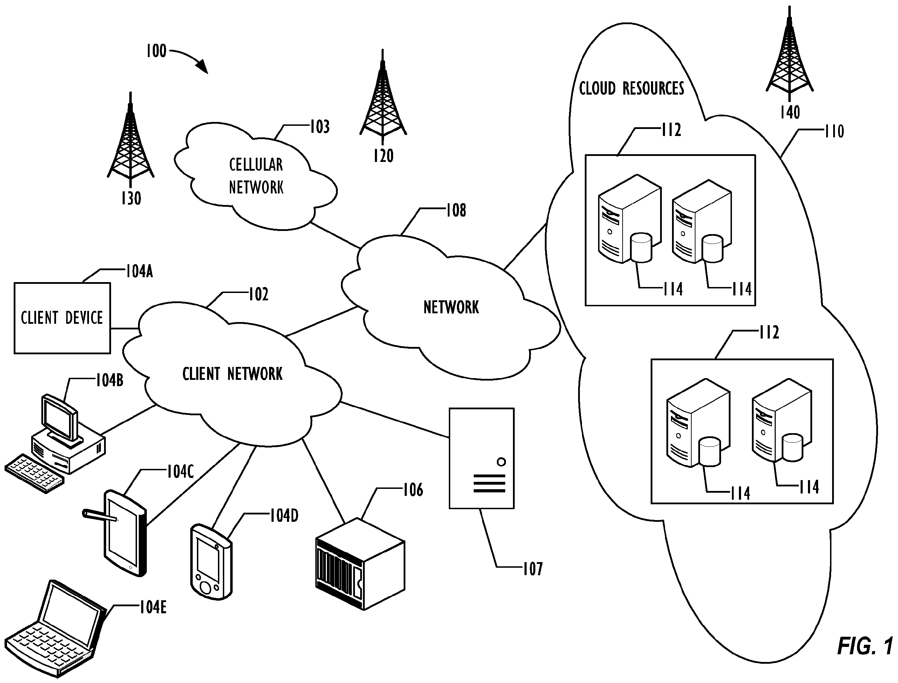

FIG. **1** illustrates a block diagram of an embodiment of a cloud computing infrastructure **100** where one or more embodiments of the present disclosure may operate. Cloud computing infrastructure **100** comprises a client network **102,** network **108,** and a cloud resources platform/network **110.** In one embodiment, the client network **102** may be a local private network, such as LAN, that includes a variety of network devices that include, but are not limited to switches, servers, and routers. Each of these networks can contain wired or wireless programmable devices and operate using any number of network protocols (*e.g.,* TCP/IP) and connection technologies (*e.g.,* Wi-Fi® networks, Bluetooth®). Wi-Fi is a registered trademark of the Wi-Fi Alliance. Bluetooth is a registered trademark of Bluetooth Special Interest Group. In another embodiment, client network **102** represents an enterprise network that could include or be communicatively coupled to one or more local area networks (LANs), virtual networks, data centers and/or other remote networks (*e.g.,* **108, 110**). As shown in FIG. **1****,** client network **102** may be connected to one or more client devices **104A-E** and allow the client devices to communicate with each other and/or with cloud resources platform/network **110.** Client devices **104A-E** may be computing systems such as desktop computer **104B,** tablet computer **104C,** mobile phone **104D,** laptop computer (shown as wireless) **104E,** and/or other types of computing systems, generically shown as client device **104A.**

FIG. **1** also illustrates that client network **102** may be connected to a local compute resource **106** that may include a server, access point, router, or other device configured to provide for local computational resources and/or to facilitate communication amongst networks and devices. For example, local compute resource **106** may be one or more physical local hardware devices configured to communicate with wireless network devices and/or facilitate communication of data between client network **102** and other networks such as network **108** and cloud resources platform/network **110.** Local compute resource **106** may also facilitate communication between other external applications, data sources, and services, and client network **102.** FIG. **1** also illustrates that client network **102** may be connected to a computer configured to execute a management, instrumentation, and discovery (MID) server **107.** For example, MID server **107** may be a Java® application that runs as a Windows® service or UNIX® daemon. Java is a registered trademark of Oracle America, Inc. Windows is a registered trademark of Microsoft Corporation. UNIX is a registered trademark of The Open Group. MID server **107** may be configured to assist functions such as, but not necessarily limited to, discovery, orchestration, service mapping, service analytics (e.g., RAM/CPU/hard disk drive (HDD) utilization rates), and event management. MID server **107** may be configured to perform tasks for a cloud-based instance, while never initiating communication directly to the cloud-instance by utilizing a work queue architecture. This configuration may assist in addressing security concerns by eliminating that path of direct communication initiation.

Cloud computing infrastructure **100** also includes cellular network **103** for use with mobile communication devices. Mobile cellular networks support mobile phones and many other types of mobile devices such as laptops etc. Mobile devices in cloud computing infrastructure **100** are illustrated as mobile phone **104D,** laptop **104E,** and tablet **104C.** A mobile device such as mobile phone **104D** may interact with one or more mobile provider networks as the mobile device moves, typically interacting with a plurality of mobile network towers **120, 130,** and **140** for connecting to the cellular network **103.** Although referred to as a cellular network in FIG. **1****,** a mobile device may interact with towers of more than one provider network, as well as with multiple non-cellular devices such as wireless access points and routers (*e.g.,* local compute resource **106**). In addition, the mobile devices may interact with other mobile devices or with non-mobile devices, such as desktop computer **104B** and various types of client device **104A** for desired services. Although not specifically illustrated in FIG. **1****,** client network **102** may also include a dedicated network device (*e.g.,* gateway or router) or a combination of network devices that implement a customer firewall or intrusion protection system.

FIG. 1 illustrates that client network **102** is coupled to a network **108.** Network 108 may include one or more computing networks, such as other LANs, wide area networks (WANs), the Internet, and/or other remote networks, in order to transfer data between client devices **104A-E** and cloud resources platform/network **110.** Each of the computing networks within network **108** may contain wired and/or wireless programmable devices that operate in the electrical and/or optical domain. For example, network **108** may include wireless networks, such as cellular networks in addition to cellular network **103.** Wireless networks may utilize a variety of protocols and communication techniques (*e.g.,* Global System for Mobile Communications (GSM) based cellular network) wireless fidelity Wi-Fi networks, Bluetooth, Near Field Communication (NFC), and/or other suitable radio-based networks as would be appreciated by one of ordinary skill in the art upon viewing this disclosure. Network **108** may also employ any number of network communication protocols, such as Transmission Control Protocol (TCP) and Internet Protocol (IP). Although not explicitly shown in FIG. **1****,** network **108** may include a variety of network devices, such as servers, routers, network switches, and/or other network hardware devices configured to transport data over networks.

In FIG. **1****,** cloud resources platform/network 110 is illustrated as a remote network (*e.g.,* a cloud network) that is able to communicate with client devices **104A-E** via client network **102** and network **108.** The cloud resources platform/network **110** acts as a platform that provides additional computing resources to the client devices **104A-E** and/or client network **102.** For example, by utilizing the cloud resources platform/network **110,** users of client devices **104A-E** may be able to build and execute applications, such as automated processes for various enterprise, IT, field service and/or other organization-related functions. In one embodiment, the cloud resources platform/network **110** includes one or more data centers **112,** where each data center **112** could correspond to a different geographic location. As will be discussed in greater detail herein, there may be multiple third party cloud resources platform/networks **110** from which an enterprise has to choose when deciding to migrate one or more of its operations to a cloud resources platform/network, e.g., each with different pricing, capabilities, scalability, security considerations, etc.

Within a particular data center **112,** a cloud service provider may include a plurality of server instances **114.** Each server instance **114** may be implemented on a physical computing system, such as a single electronic computing device (*e.g.,* a single physical hardware server) or could be in the form of a multi-computing device (*e.g.,* multiple physical hardware servers). Examples of server instances **114** include, but are not limited to, a web server instance (*e.g.,* a unitary Apache® installation), an application server instance (*e.g.,* a unitary Java Virtual Machine), and/or a database server instance (*e.g.,* a unitary MySQL® catalog). Apache is a registered trademark of Apache Software Foundation. MySQL is a registered trademark of MySQL AB.

To utilize computing resources within a cloud resources platform/network **110,** network operators may choose to configure data centers **112** using a variety of computing infrastructures. In one embodiment, one or more of data centers **112** are configured using a multi-tenant cloud architecture such that a single server instance **114,** which can also be referred to as an application instance, handles requests and serves more than one customer. In some cases, data centers with multi-tenant cloud architecture commingle and store data from multiple customers, where multiple client instances are assigned to a single server instance **114.** In a multi-tenant cloud architecture, the single server instance **114** distinguishes between and segregates data and other information of the various customers. For example, a multi-tenant cloud architecture could assign a particular identifier for each customer in order to identify and segregate the data from each customer. In a multitenancy environment, multiple customers share the same application, running on the same operating system, on the same hardware, with the same data-storage mechanism. The distinction between the customers is achieved during application design, thus customers do not share or see each other's data. This is different than virtualization where components are transformed, enabling each customer application to appear to run on a separate virtual machine. Generally, implementing a multi-tenant cloud architecture may have a production limitation, such as the failure of a single server instance **114** causing outages for all customers allocated to the single server instance **114.**

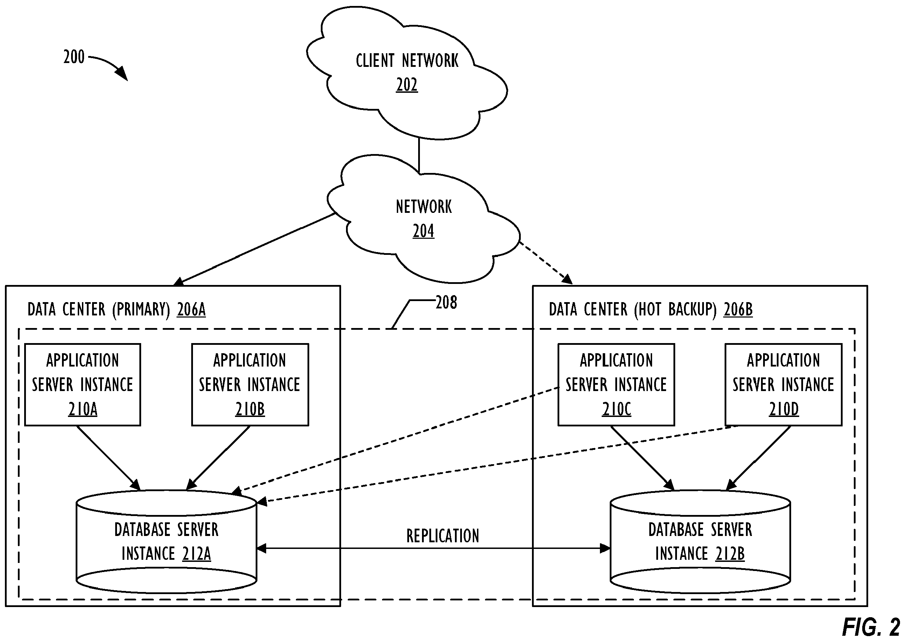

In another embodiment, one or more of the data centers **112** are configured using a multi-instance cloud architecture to provide every customer its own unique client instance. For example, a multi-instance cloud architecture could provide each client instance with its own dedicated application server and dedicated database server. In other examples, the multi-instance cloud architecture could deploy a single server instance **114** and/or other combinations of server instances **114,** such as one or more dedicated web server instances, one or more dedicated application server instances, and one or more database server instances, for each client instance. In a multi-instance cloud architecture, multiple client instances could be installed on a single physical hardware server where each client instance is allocated certain portions of the physical server resources, such as computing memory, storage, and processing power. By doing so, each client instance has its own unique software stack that provides the benefit of data isolation, relatively less downtime for customers to access the cloud resources platform/network **110,** and customer-driven upgrade schedules. An example of implementing a client instance within a multi-instance cloud architecture will be discussed in more detail below when describing FIG. **2****.**

In one embodiment, utilizing a multi-instance cloud architecture, a first client instance may be configured with a client side application interface such as, for example, a web browser executing on a client device (*e.g.,* one of client devices **104A-E** of FIG. **1**).

FIG. **2** illustrates a block diagram of an embodiment of a multi-instance cloud architecture **200** where embodiments of the present disclosure may operate. In particular, FIG. **2** illustrates that the multi-instance cloud architecture **200** includes a client network **202** that connects to two data centers **206A** and **206B** via network **204.** Client network **202** and network **204** may be substantially similar to client network **102** and network **108,** respectively, as described in FIG. **1****.** Data centers **206A** and **206B** can correspond to FIG. **1**'s data centers **112** located within cloud resources platform/network **110.**

Using FIG. **2** as an example, a client instance **208** is composed of four dedicated application server instances **210A-210D** and two dedicated database server instances **212A** and **212B.** Stated another way, the application server instances **210A-210D** and database server instances **212A** and **212B** are not shared with other client instances **208.** Other embodiments of multi-instance cloud architecture **200** could include other types of dedicated server instances, such as a web server instance. For example, client instance **208** could include the four dedicated application server instances **210A-210D,** two dedicated database server instances **212A** and **212B,** and four dedicated web server instances (not shown in FIG. **2**).

To facilitate higher availability of client instance **208,** application server instances **210A-210D** and database server instances **212A** and **212B** are shown to be allocated to two different data centers **206A** and **206B,** where one of data centers **206** may act as a backup data center. In reference to FIG. **2****,** data center **206A** acts as a primary data center that includes a primary pair of application server instances **210A** and **210B** and primary database server instance **212A** for client instance **208,** and data center **206B** acts as a secondary data center to back up primary data center **206A** for client instance **208.** To back up primary data center **206A** for client instance **208,** secondary data center **206B** includes a secondary pair of application server instances **210C** and **210D** and a secondary database server instance **212B.** Primary database server instance **212A** is able to replicate data to secondary database server instance **212B.**

As shown in FIG. **2****,** primary database server instance **212A** replicates data to secondary database server instance **212B** using a replication operation such as, for example, a Master-Master MySQL Binlog replication operation. The replication of data between data centers could be implemented in real time or by implementing full backup weekly and daily incremental backups in both data centers **206A** and **206B.** Having both a primary data center **206A** and secondary data center **206B** allows data traffic that typically travels to the primary data center **206A** for client instance **208** to be diverted to secondary data center **206B** during a failure and/or maintenance scenario. Using FIG. **2** as an example, if application server instances **210A** and **210B** and/or primary data server instance **212A** fail and/or are under maintenance, data traffic for client instance **208** can be diverted to secondary application server instances **210C** and **210D** and secondary database server instance **212B** for processing.

Although FIGS. **1** and **2** illustrate specific embodiments of cloud computing system **100** and multi-instance cloud architecture **200,** respectively, the disclosure is not limited to the specific embodiments illustrated in FIGS. **1** and **2****.** For example, although FIG. **1** illustrates that cloud resources platform/network **110** is implemented using data centers, other embodiments of the cloud resources platform/network **110** are not limited to data centers and can utilize other types of remote network infrastructures. Moreover, other embodiments of the present disclosure may combine one or more different server instances into a single server instance. Using FIG. **2** as an example, application server instances **210** and database server instances **212** can be combined into a single server instance. The use and discussion of FIGS. **1** and **2** are only exemplary and offered to facilitate ease of description and explanation.

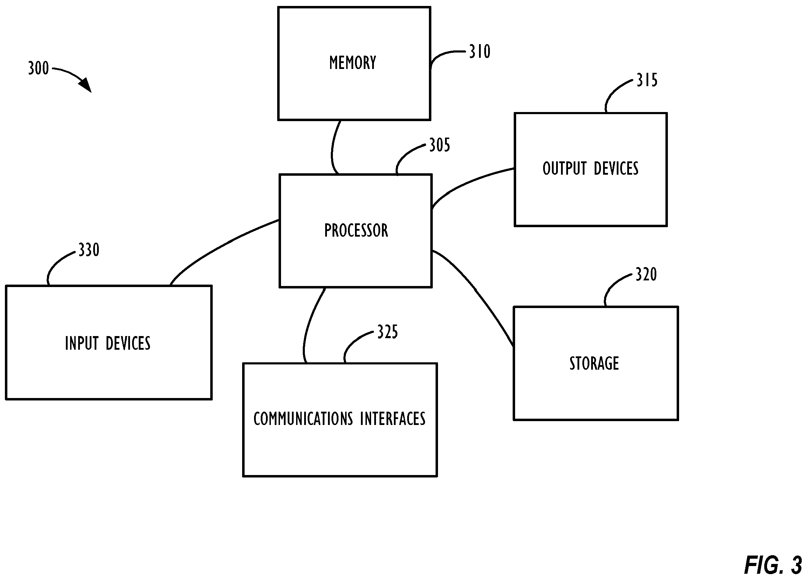

FIG. **3** illustrates a high-level block diagram **300** of a processing device (i.e., computing system) that may be used to implement one or more disclosed embodiments (*e.g.,* cloud resources platform/network **110,** client devices **104A-104E,** client instance **208,** server instances **114,** data centers **206A-206B,** etc.). For example, computing device **300** illustrated in FIG. **3** could represent a client device or a physical server device and include either hardware or virtual processor(s) depending on the level of abstraction of the computing device. In some instances, computing device **300** and its elements as shown in FIG. 3 each relate to physical hardware, and, in some instances, one, more, or all of the elements could be implemented using emulators or virtual machines as various levels of abstraction. In any case, no matter how many levels of abstraction away from the physical hardware, computing device **300,** at its lowest level, may be implemented on physical hardware. As also shown in FIG. **3****,** computing device **300** may include one or more input devices **330,** such as a keyboard, mouse, touchpad, or sensor readout (*e.g.,* biometric scanner) and one or more output devices **315,** such as displays, speakers for audio, or printers. Some devices may be configured as input/output devices also (*e.g.,* a network interface or touchscreen display). Computing device **300** may also include communications interfaces **325,** such as a network communication unit that could include a wired communication component and/or a wireless communications component, which may be communicatively coupled to processor **305.** The network communication unit may utilize any of a variety of proprietary or standardized network protocols, such as Ethernet, TCP/IP, to name a few of many protocols, to effect communications between devices. Network communication units may also comprise one or more transceivers that utilize the Ethernet, power line communication (PLC), Wi-Fi, cellular, and/or other communication methods.

As illustrated in FIG. 3, processing device **300** includes a processing element such as processor **305** that contains one or more hardware processors, where each hardware processor may have a single or multiple processor cores. In one embodiment, the processor **305** may include at least one shared cache that stores data (*e.g.,* computing instructions) that are utilized by one or more other components of processor **305.** For example, the shared cache may be a locally cached data stored in a memory for faster access by components of the processing elements that make up processor **305.** In one or more embodiments, the shared cache may include one or more mid-level caches, such as level 2 (L2), level 3 (L3), level 4 (L4), or other levels of cache, a last level cache (LLC), or combinations thereof. Examples of processors include, but are not limited to a central processing unit (CPU) a microprocessor. Although not illustrated in FIG. **3****,** the processing elements that make up processor **305** may also include one or more other types of hardware processing components, such as graphics processing units (GPUs), application specific integrated circuits (ASICs), field-programmable gate arrays (FPGAs), and/or digital signal processors (DSPs).

FIG. **3** illustrates that memory **310** may be operatively and communicatively coupled to processor **305.** Memory **310** may be a non-transitory medium configured to store various types of data. For example, memory **310** may include one or more volatile devices such as random access memory (RAM). Non-volatile storage devices **320** can include one or more disk drives, optical drives, solid-state drives (SSDs), tap drives, flash memory, read only memory (ROM), and/or any other type memory designed to maintain data for a duration time after a power loss or shut down operation. In certain instances, the non-volatile storage devices **320** may be used to store overflow data if allocated RAM is not large enough to hold all working data. The non-volatile storage devices **320** may also be used to store programs that are loaded into the RAM when such programs are selected for execution.

Persons of ordinary skill in the art are aware that software programs may be developed, encoded, and compiled in a variety of computing languages for a variety of software platforms and/or operating systems and subsequently loaded and executed by processor **305.** In one embodiment, the compiling process of the software program may transform program code written in a programming language to another computer language such that the processor **305** is able to execute the programming code. For example, the compiling process of the software program may generate an executable program that provides encoded instructions (*e.g.,* machine code instructions) for processor **305** to accomplish specific, non-generic, particular computing functions.

After the compiling process, the encoded instructions may then be loaded as computer executable instructions or process steps to processor **305** from storage **320,** from memory **310,** and/or embedded within processor **305** (*e.g.,* via a cache or on-board ROM). Processor **305** may be configured to execute the stored instructions or process steps in order to perform instructions or process steps to transform the computing device into a non-generic, particular, specially programmed machine or apparatus. Stored data, *e.g.,* data stored by a storage device **320,** may be accessed by processor **305** during the execution of computer executable instructions or process steps to instruct one or more components within the computing device **300.**

A user interface (*e.g.,* output devices **315** and input devices **330**) can include a display, positional input device (such as a mouse, touchpad, touchscreen, or the like), keyboard, or other forms of user input and output devices. The user interface components may be communicatively coupled to processor **305.** When the output device is or includes a display, the display can be implemented in various ways, including by a liquid crystal display (LCD) or a cathode-ray tube (CRT) or light emitting diode (LED) display, such as an OLED display. Persons of ordinary skill in the art are aware that the computing device **300** may comprise other components well known in the art, such as sensors, powers sources, and/or analog-to-digital converters, not explicitly shown in FIG. **3****.**

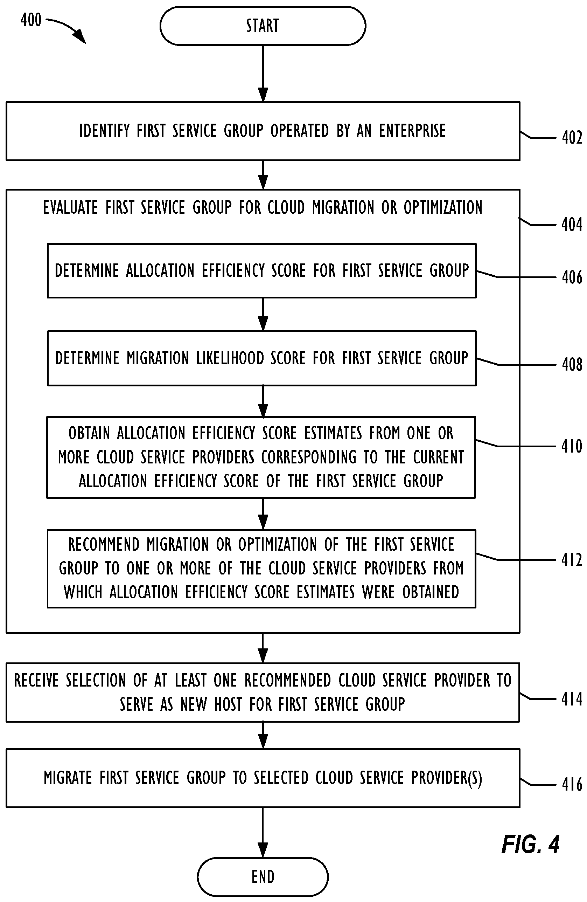

FIG. **4** illustrates a flow chart of a method **400** for providing insights related to the migration or optimization of cloud computing services for an enterprise, according to one or more embodiments of the present disclosure. The method starts at block **402,** by identifying a first service group operated by the enterprise for potential migration and/or optimization. In some embodiments, the method **400** may initially identify a plurality of candidate service groups, e.g., all of the service groups existing within the enterprise, or all service groups having a migration likelihood score that exceeds a predetermined threshold value, etc. In other embodiments, the enterprise may have predetermined a list of candidate service groups within the enterprise that are to be evaluated for potential cloud migration or optimization. In any event, one of the candidate service groups will be identified as the first service group to be evaluated for cloud migration or optimization (block **402**). In some embodiments, the candidate service group having the highest migration likelihood score may be the first service group evaluated. As mentioned above, the migration likelihood score comprises a computed estimate of the likelihood that the enterprise would be interested in migrating the respective service group to the public cloud. In some embodiments, a threshold for automatic migration could be set up. For example, for any service group with a migration likelihood score of 95% or greater, the enterprise system may attempt to automatically upgrade the service group to the most optimal one or more cloud service providers.

The evaluation process of block **404** may comprise several sub-tasks, e.g., blocks **406/408/410/412,** as shown in FIG. **4****.** For example, at block **406,** an allocation efficiency score may be determined for the first service group. The allocation efficiency score comprises a measurement or valuation of how much (or how well) the enterprise's resources are being spent on a particular service group. For example, in some embodiments, the allocation efficiency score may comprise a cost per unit measurement of time to operate the service group, e.g., "$50,000 per month." In other embodiments, the allocation efficiency score may comprise an operational metric related to the service group (e.g., 50 Gigabytes) or an operational metric per unit measurement of time related to the service group (e.g., 50 Gigabytes per month). In still other embodiments, the allocation efficiency score may comprise an estimate of an overall usage efficiency for the first service group (e.g., the host machines in the service group are being used at 68% of their maximum capacity).

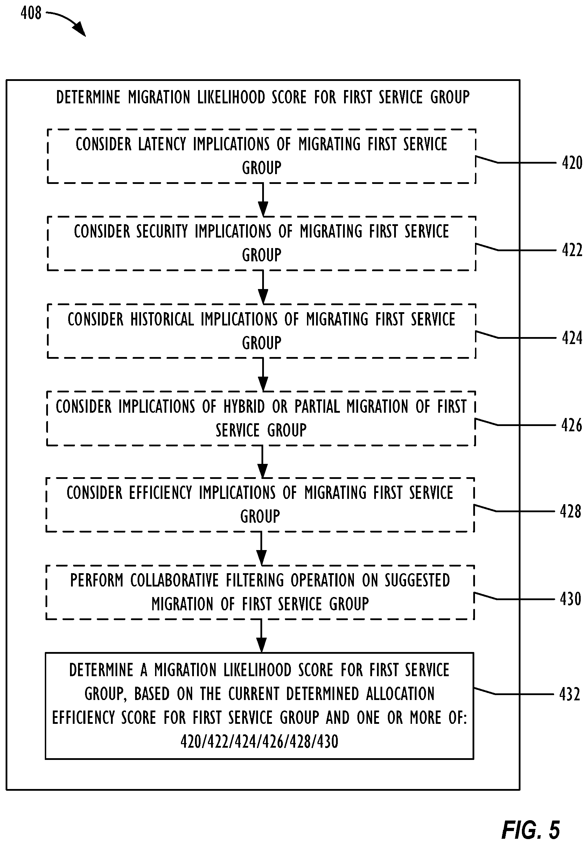

At block **408,** if not already determined, a migration likelihood score may be determined for the first service group. Further details regarding the migration likelihood score determination process will be discussed below, with reference to FIG. **5****.**

At block **410,** an allocation efficiency score estimate may be obtained from one or more cloud service providers, wherein the obtained allocation efficiency score estimate corresponds to the determined current allocation efficiency score for the first service group. In other words, if the current allocation efficiency score for the first service group is "$50,000 per month," then the obtained estimates from the one or more other cloud service providers should be the monthly prices for comparable services to be provided/hosted by the other cloud service providers on a monthly basis, e.g., "Company X: $43,334 per month," or "Company Y: $18,500 per month." In the event that the current allocation efficiency score for the first service group is represented as an efficiency percentage, e.g., "First Service Group operating at 68% of operational capacity," then the obtained estimates from the one or more other cloud service providers should be the estimated operational capacities for comparable services to be provided/hosted by the other cloud service providers, e.g., "Company X would operate this service group at 88% of operational capacity," or "Company Y would operate this service group at 98% of operational capacity." In some embodiments, the allocation efficiency score estimates may be obtained via the use of the third party cloud service providers' public Application Programmer Interfaces (APIs), which may, e.g., return a quoted price point (or other operational metric) based on a requested parameter from the enterprise user, such as desired storage space, processing power, memory requirements, etc.

At block **412,** the method may recommend the migration and/or optimization of the first service group to one or more of the one or more cloud service providers from which allocation efficiency score estimates were obtained. In some embodiments, the recommendations may be presented to an enterprise user via a user interface, e.g., by sorting the one or more cloud service providers based on allocation efficiency score estimate, by recommending only the cloud service provider having the highest allocation efficiency score estimate, by recommending only a predetermined number, n, of the cloud service providers having the n highest allocation efficiency score estimates, etc.

As mentioned above, the act of recommending one or more cloud service providers to the enterprise for migration may be performed: continuously (e.g., based on events raised by a system monitoring tool that continuously monitors the operational metrics of enterprise components); at a periodic interval (e.g., daily); at an irregular interval (e.g., any time requested by an IT manager of the enterprise, or anytime the enterprise system configuration has been changed, such as the installation of a new web server, etc.); in response to a statistical "outlier" event (e.g., an event that is a statistically significant outlier, based on the measurement of at least a first operational metric) being registered in the enterprise system (e.g., when a given host has been processing more than X requests in a day, wherein X is a number of requests that is 3 or more standard deviations higher than the average number of requests handled by similar servers within the enterprise); or in response to a certain threshold or acceptable levels of some enterprise operational metric being exceeded (e.g., when an enterprise database server registers less than Y% of remaining storage capacity, wherein Y% is a predetermined minimum remaining storage capacity threshold configurable by the enterprise). In some embodiments, Statistical Process Control (SPC), including SPC using rules that have been custom-written for the particular enterprise, may be used to assist the recommendation engine in determining when a statistically significant outlier event is occurring within the enterprise system that should be brought to an enterprise user's attention.

In some embodiments, the recommendation may also comprise an information message or link to a knowledge base article, e.g., giving the enterprise user additional insight into why the particular migration is being suggested and/or the historical bases for the recommendation being made. For example, if a particular recommendation is for an enterprise to migrate to an additional cloud server in order to host a given service group, the recommendation insight message presented to the enterprise user may take the form of, "In the past, for this service group, Enterprise had 10 different web sites running on the previous version of a single web server. Now that the web server's version has been upgraded, the memory needs have gone up. By dividing these 10 web sites between two servers (rather than a single one), Enterprise could reduce the amount of RAM needed on each server machine, and it would save Enterprise approximately $X per month over our current costs for hosting this service group."

In other embodiments, the recommendations may even be 'predictive' in nature, e.g., "At current consumption rates, you'll likely need to increase your storage space on host X within 1 month," or "If you migrate to Company X now, it's going to be cheaper than your current costs at first, but eventually will be more expensive once your memory requirements exceed Y gigabytes. Once exceeding Y gigabytes, you may want to consider migrating to Company Z." In some cases, the knowledge insights provided by the recommendation system may even provide the enterprise user with increased negotiation leverage for negotiating with cloud service providers, e.g., allowing the enterprise user to approach a cloud service provider with a proposition like the following: "We want to move the other 60% of our data to you, cloud service provider 2, but it would cost us $X more than if we maintained that 60% of our data with our current cloud service provider 1. Can you give us a discount on this additional data storage, so that we can migrate 100% of our data to you, cloud service provider 2?" As may be appreciated, as more historical information is gathered over time, and as additional operational intelligence is added to the recommendation engine, the recommendations provided to the enterprise user may be become even more sophisticated and insightful, resulting in recommendations that save an even greater amount of enterprise resources in the short- or long-term.

Once the method **400** has performed all of the desired evaluation-related sub-tasks of block **404** (including the recommendation, if any, of candidate cloud service providers for the migration of the first service group), the method may proceed to block **414,** wherein the method awaits the receipt of a selection, e.g., via a user interface, of at least one of the recommended cloud service providers to serve as the new host for the first service group. The selection may be input by a user, e.g., via the selection of a radio button, check box, drop-down list item, etc. When the selection has been confirmed, the method may, at block **416,** begin the process of migrating the first service group to the selected one or more cloud service providers. The process of actually migrating host servers, applications, etc., from a private cloud to a public cloud is potentially time consuming and disruptive to the delivery of services to the enterprise's customers. However, performing migrations at the "service group"-level allows the enterprise to have a much better understanding of what services and/or devices may "fail" during the migration transition process. As may now be understood, rather than simply helping enterprises physically migrate their service groups to the public cloud, the benefits of method **400** include letting the enterprise know which service groups (including all the various components working together to deliver the service group's service) it would make the most strategic sense to migrate to the cloud, when to migrate those service groups to the cloud, how to migrate them, and to which cloud service provider(s) they should be migrated. As mentioned above, the evaluation process of migrating and/or optimizing an enterprise's service groups via cloud migration may be executed continuously, at certain time intervals, and/or in response to changes in certain operational metrics-such that the enterprise may continually be able to take advantage of, e.g., changes in their computing resource needs over time, changes in pricing schemes at various cloud service providers over time, changes in the enterprise's strategic goals or focus, etc.

FIG. **5** illustrates a flow chart providing greater detail to block **408** of FIG. **4****,** and, in particular, potential sub-tasks involved in providing migration likelihood scores for a service group, according to one or more embodiments of the present disclosure. According to some embodiments, the migration likelihood score determined for a particular service group may take many different factors into account. At block **420,** one such factor that may be considered is the latency implication of migrating the first service group to the cloud. (Dashed lines around a block in FIG. **5** indicate that the performance of that block is noted as being optional to the performance of the overall method.) For example, if a service group typically responds to customer requests with 15ms latency in its current private cloud configuration, but migrating the service group to a public cloud would be estimated to increase average latency times to 35ms, then this factor may weigh against the likelihood that the enterprise would want to migrate this particular service group to the cloud. As may be understood, the greater the increase in latency expected from cloud migration, the more negatively the migration likelihood score of the service group may be affected (and vice versa).

At block **422,** another factor that may be considered is the security implication of migrating the first service group to the cloud. For example, if a proposed migration would cause one or more servers from the service group to be located behind a firewall and need to communicate with other servers not behind the same firewall, that may present a vulnerability in the system and thus an increased security risk/lower migration likelihood score. Conversely, if a proposed migration would cause each of the server devices from the service group to be located in the same private cloud, that may present a decreased security risk/higher migration likelihood score.

At block **424,** another factor that may be considered is the historical implication of migrating the first service group to the cloud. For example, if the same enterprise (or a similarly-situated enterprise) has migrated a similar service group in the past, resulting in a more efficient allocation of the enterprise's resources, it may increase the chance that the enterprise would be likely to make the same (or similar) migration again in the future. Conversely, if a particular service group or type of service group has never been migrated to the cloud, it may be indicative of a particular reason (e.g., a technical and/or business reason) that the particular service group or type of service group can not operate securely or efficiently when hosted in the public cloud, thus the migration likelihood score for the first service group may be decreased in such a situation.

At block **426,** another factor that may be considered is the implication of enacting a hybrid or partial migration of the first service group to the cloud. For example, sometimes a recommended migration may involve moving only part of the components that are working together to form the first service group into the public cloud, i.e., leaving the remainder of the components of the first service group in the enterprise's private cloud. In some instances, as discussed above, this may result in heightened security risks, thus negatively impacting such a migration strategy's overall migration likelihood score.

At block **428,** another factor that may be considered is the efficiency implication of migrating the first service group to the cloud. For example, as may be understood, if the recommended cloud migration would result in an increased overall efficiency to the enterprise (e.g., in terms of monetary outlay, or processing/power/memory utilization), this may positively impact the migration strategy's overall migration likelihood score. Conversely, a recommended cloud migration that would result in decreased overall efficiency to the enterprise may negatively impact the migration strategy's overall migration likelihood score.

At block **430,** another factor that may be considered when determining the likelihood that the enterprise would want to perform a cloud migration of the first service group is the use of a collaborative filtering operation. Collaborative filtering is a general name for a class of algorithms that attempt to make estimates about the interests or preferences of a first user based on the interests or preferences of many other users. In one embodiment, a Slope One algorithm may be used to perform item-based collaborative filtering, leveraging the likelihood rating and migration decisions of other similarly-situated enterprise users to predict how likely the enterprise would be to want to migrate the first service group to a particular cloud service provider(s).

Finally, at block **432,** a final migration likelihood score may be determined for the first service group, based on the current determined allocation efficiency score for the group (e.g., a very low current allocation efficiency score may be more indicative of a likelihood to migrate to the cloud for greater efficiency) and, optionally, one or more of the various factors described above with reference to blocks **420/422/424/426/428/430.**

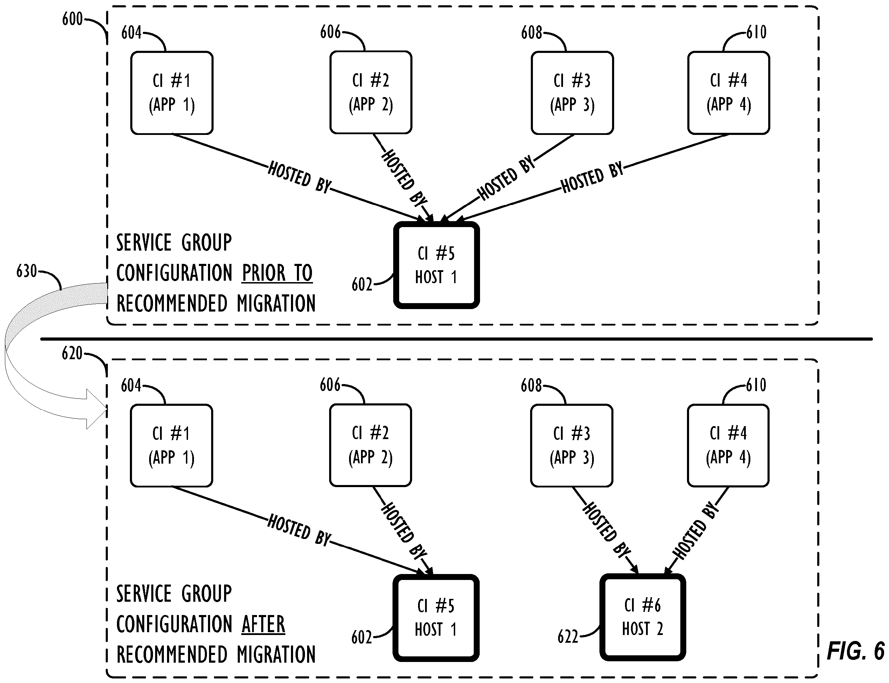

FIG. **6** illustrates a block diagram of an exemplary recommended cloud migration process **630,** according to one or more embodiments of the present disclosure. In the example shown in FIG. **6****,** the recommended cloud migration comprises a load balancing situation, wherien a particular host appears to be over-burdened by the number of applications it is hosting, and thus the recommended load balancing migration may result in better efficiency, latency, memory utilization, etc. Service group **600** represents the status of the service group prior to the completion of the recommended migration. As is illustrated, the service group **600** comprises a set of four applications: App 1 (**604**), App 2 (**606**), App 3 (**608**), and App 4 (**610**), labeled as Configuration Items (CIs) #1-#4, respectively. [The CI numbering scheme used herein is purely illustrative, and used only for purposes of tracking and distinguishing between the CIs in the various examples presented herein.] Each of App 1 (**604**), App 2 (**606**), App 3 (**608**), and App 4 (**610**) is hosted by a first host, Host 1 (**602**) [CI #5], as is indicated by the arrows labeled "HOSTED BY." In this example, the recommendation engine has made a determination that the service group **600** may operate more efficiently by splitting the four applications between two different hosts, i.e., rather than all being hosted on Host 1 (**602**) [CI #5]. Thus, service group **620** represents the configuration of the service group after the implementation of exemplary recommended cloud migration process **630.** In particular, App 3 (**608**) [CI #3] and App 4 (**610**) [CI #4] are now hosted by a second host, Host 2 (**622**) [CI #6], resulting in a more efficiently operating service group.

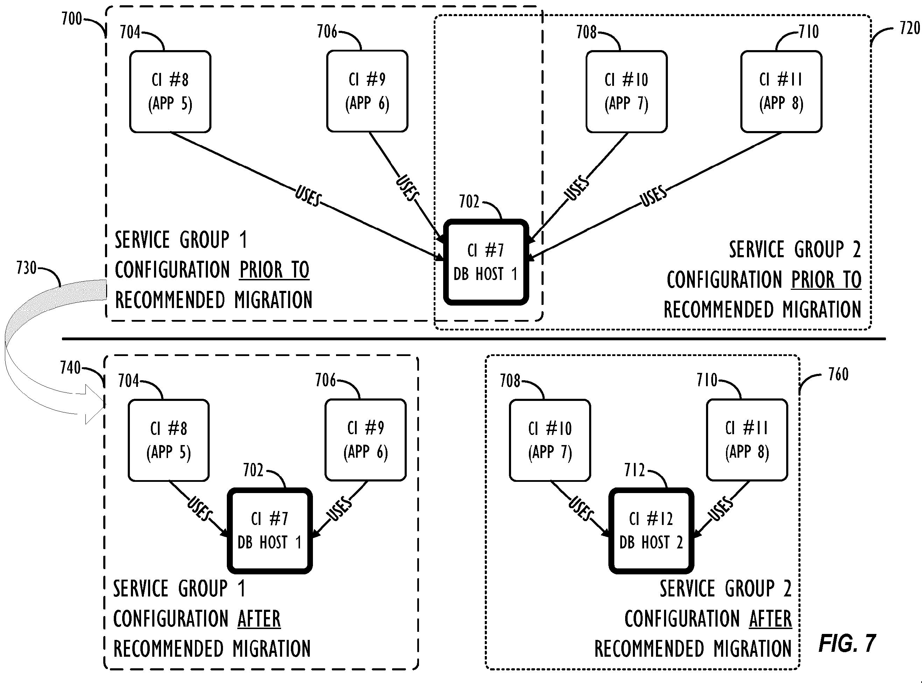

FIG. **7** illustrates a block diagram of another exemplary recommended cloud migration process **730,** according to one or more embodiments of the present disclosure. In the example shown in FIG. **7****,** the recommended cloud migration comprises a 'detangling' situation, wherien a particular host appears to be shared by two different and unrelated service groups. For example, the two different service groups **700** and **720** shown in FIG. **7** are currently using the same database server host **702** (meaning that there are likely to be two database instances, two different listeners on two different ports, etc., on same host machine). Thus, the recommended detangling migration may result in better efficiency, latency, memory utilization, etc., for each service group.

As alluded to above, service group **700** represents the status of a first service group prior to the completion of the recommended migration, and service group **720** represents the status of a second service group prior to the completion of the recommended migration. As is illustrated, the first service group **700** comprises a set of two applications: App 5 (**704**) [CI #8] and App 6 (**706**) [CI #9], while the second service group **720** comprises a set of two different and unrelated applications: App 7 (**708**) [CI #10] and App 8 (**710**) [CI #11]. Each of App 5 (**704**), App 6 (**706**), App 7 (**708**), and App 8 (**710**) is hosted by a first host, DB Host 1 (**702**) [CI #7], as is indicated by the arrows labeled "USES." In this example, the recommendation engine has made a determination that the first service group **700** may operate more efficiently by splitting the four applications between two different hosts, separated by service group, i.e., rather than all being hosted on DB Host 1 (**702**) [CI #7]. Thus, service group **740** represents the configuration of the first service group **700** after the implementation of exemplary recommended cloud migration process **730,** and service group **760** represents the configuration of the second service group **720** after the implementation of exemplary recommended cloud migration process **730.** In particular, App 5 (**704**) [CI #8] and App 6 (**706**) [CI #9] are now the only applications hosted by DB Host 1 (**702**) [CI #7], and App 7 (**708**) [CI #10] and App 8 (**710**) [CI #11] are now the only applications hosted by a second host, DB Host 2 (**712**) [CI #12], resulting in a more efficiently operating pair of service groups.

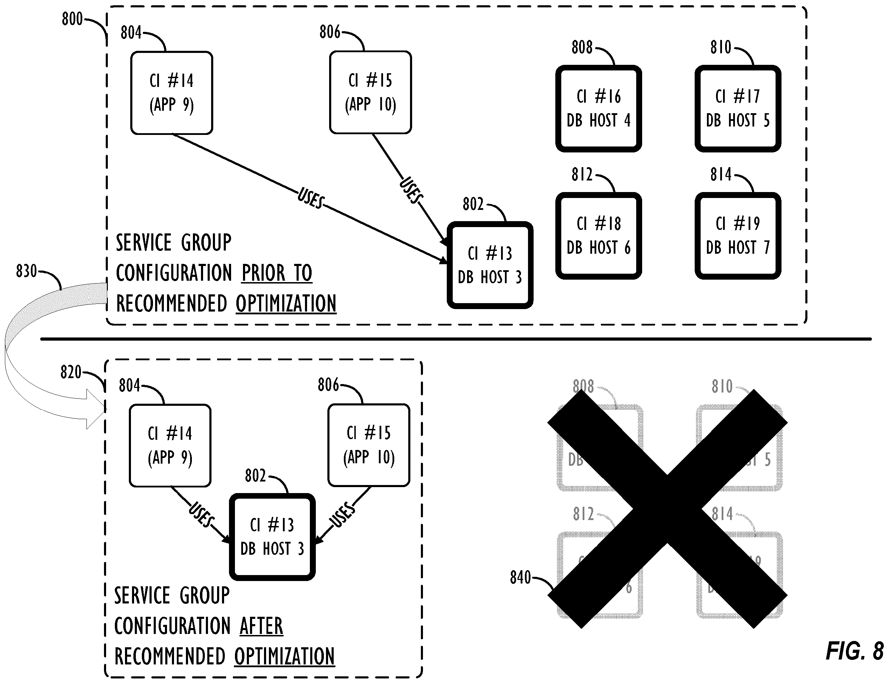

FIG. **8** illustrates a block diagram of yet another exemplary recommended cloud migration process **830,** according to one or more embodiments of the present disclosure. In the example shown in FIG. **8****,** the recommended cloud migration comprises a 'decommissioning of service' situation, wherien one or more hosts appear to be unutilized (or underutilized), and thus the recommended decommissioning of service may result in better efficiency and allocation of enterprise resources. Service group **800** represents the status of a first service group prior to the completion of the recommended decommissioning of service, and service group **820** represents the status of a first service group after the completion of the recommended migration. As is illustrated, the first service group **800** comprises a set of two applications: App 9 (**804**) [CI #14] and App 10 (**806**) [CI #15], hosted by a third host, DB Host 3 (**802**) [CI #13], as is indicated by the arrows labeled "USES." There are also several other hosts in the service group **800** that appear to currently be unutilized: DB Host 4 (**808**) [CI #16], DB Host 5 (**810**) [CI #17], DB Host 6 (**812**) [CI #18], and DB Host 7 (**814**) [CI #19]. In this example, the recommendation engine has made a determination that the first service group **800** may operate more efficiently by decommissioning the four unutilized hosts. Thus, service group **820** represents the configuration of the first service group **800** after the implementation of exemplary recommended cloud migration process **830,** with a large 'X' (**840**) placed over the decommissioned hosts. As may be appreciated, each decommissioned host can allow the enterprise to recoup the entire operational costs of such hosts. In other embodiments, one or more hosts in the service group may be downsized rather than completely decommissioned, e.g., if they are being underutilized, as opposed to unutilized entirely. For example, the amount of RAM or hard drive space being paid for on a host may be downsized if there is significant excess capacity that has not been needed and/or is not predicted to be needed under normal operating conditions of the service group.

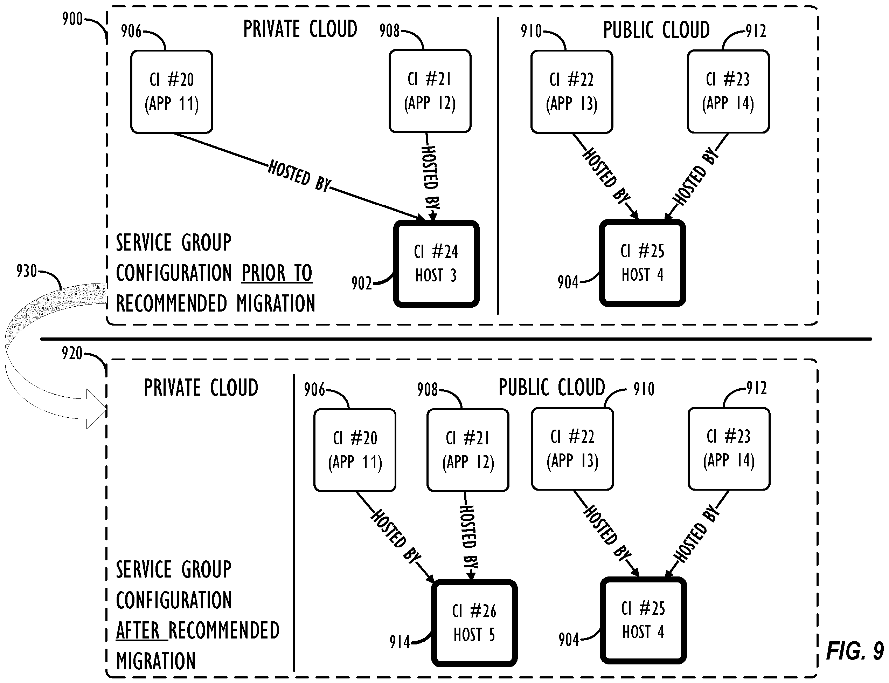

FIG. **9** illustrates a block diagram of still another exemplary recommended cloud migration process **930,** according to one or more embodiments of the present disclosure. In the example shown in FIG. **9****,** the recommended cloud migration comprises a migration of a service group from a hybrid cloud configuration to a fully public cloud configuration. As mentioned above, moving an entire service group into the cloud may provide additional security against potential data breaches. Service group **900** represents the status of the service group prior to the completion of the recommended migration. As is illustrated, the service group **900** comprises a set of four applications: App 11 (**906**) [CI# 20] and App 12 (**908**) [CI #21] (which are hosted in a private enterprise cloud environment on a third host, Host 3 (**902**) [CI #26], as is indicated by the arrows labeled "HOSTED BY"); and App 13 (**910**) [CI #22] and App 14 (**912**) [CI #23] (which are hosted in the public cloud on a fourth host, Host 4 (**904**) [CI #25], as is also indicated by the arrows labeled "HOSTED BY.") In this example, the recommendation engine has made a determination that the service group **900** may operate more efficiently and/or securely by moving all components of the service group into the public cloud, i.e., rather than having a hybrid public/private cloud configuration. Thus, service group **920** represents the configuration of the service group after the implementation of exemplary recommended cloud migration process **930.** In particular, App 11 (**906**) [CI #20] and App 12 (**908**) [CI #21] are now hosted by a new fifth host in the public cloud, Host 5 (**914**) [CI #26], resulting in a more efficiently and/or securely operating service group. In this example, App 13 (**910**) [CI #22] and App 14 (**912**) [CI #23] remain unaffected by this migraiton, since they were already hosted in the public cloud.

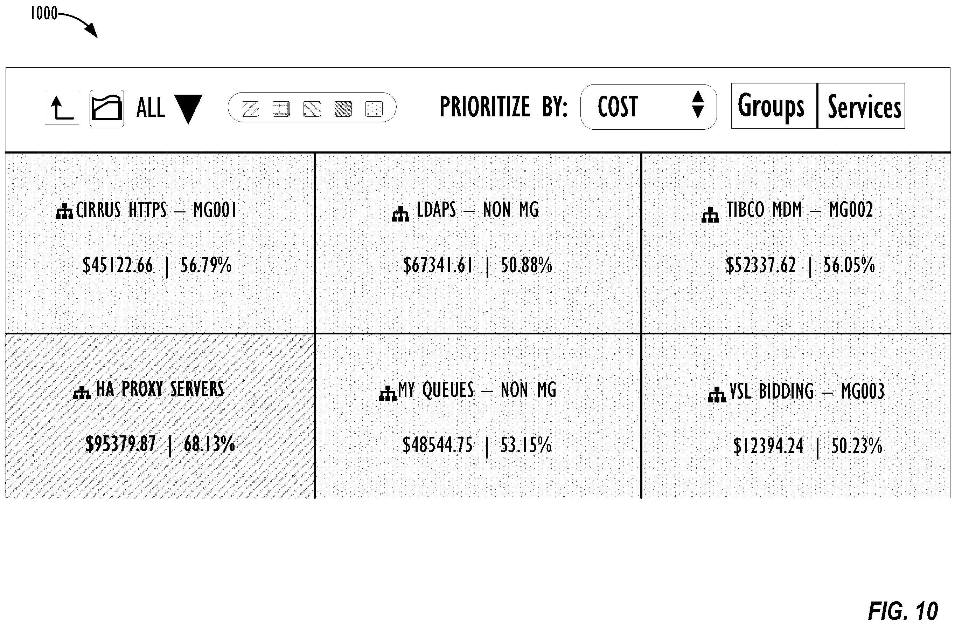

FIG. **10** illustrates a user interface **1000** for a service group migration and/or optimization recommendation engine, according to one or more embodiments of the present disclosure. In some embodiments, the service groups that are the subject of a migration and/or optimization recommendation engine may be presented to an enterprise user, e.g., via a user interface, in conjunction with the service group's current allocation efficiency score and/or migration likelihood score. In some embodiments, each service group's current allocation efficiency score may take the form of a percentage value between 0% and 100%, reflecting the efficiency level at which the service group is currently being utilized. In other embodiments, each service group's current allocation efficiency score may take the form of a cost per unit measurement of time to operate the service group, e.g., "$50,000 per month." In still other embodiments, each service group may be presented in the migration and/or optimization recommendation engine user interface in conjunction with both an efficiency score and a cost per unit measurement of time.

In some embodiments, the presentation of the service group may further be color-coded (or otherwise categorized) by migration likelihood score, in order to direct a user's attention to the potentially most important service groups within the enterprise to consider for migration. For example, service groups that have a 0-20% likelihood of migration may be coded with the color "green" or the term "low"; service groups that have a 21-40% likelihood of migration may be coded with the color "blue" or the term "medium-low"; service groups that have a 41-60% likelihood of migration may be coded with the color "yellow" or the term "medium"; service groups that have a 61-80% likelihood of migration may be coded with the color "orange" or the term "medium-high"; and service groups that have a 81-100% likelihood of migration may be coded with the color "red" or the term "high."

According to some embodiments, the recommendaiton engine user interfae may be prioritized or sorted by one or more variables, such as cost, efficiency score, and/or migration likelihood score.

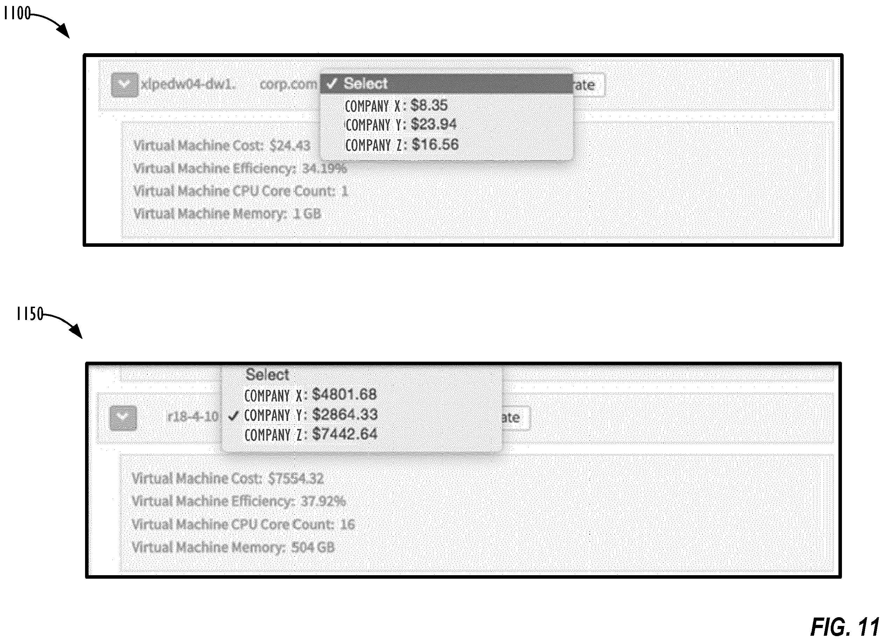

FIG. **11** illustrates various user interfaces **1100/1150** for service group migration and/or optimization selection, according to one or more embodiments of the present disclosure. User interfaces **1100/1150** provide examples of lists of exemplary cloud service providers that have been recommended to an enterprise user for the migration of an exemplary service group. User interfaces **1100/1150** are also examples of interfaces that an enterprise user may see following the selection of a particular service group in the recommendaiton interface of FIG. **10****,** described above.

As may be seen from the drop-down menu in user interfaces **1100/1150,** each of Companies X, Y, and Z offers a different monetary price for the hosting of the respective service group. In some cases, the cloud service provider having the lowest cost will be the most optimal choice for the enterprise, but, in other situations, there may be other quality-based or operational-based differences between the hosting services provided by the different cloud service providers (e.g., efficiency, processing power, memory amount, latency, uptime, etc.) that may make a more expensive cloud service provider a more optimal choice for the enterprise in a given situation, e.g., situations where the criticality of the service group is such that performance is prioritized over simply the price point. Additionally, in some embodiments, the service group migration and/or optimization user interface may provide additional historical data to aid the enterprise in the selection of the most appropriate cloud service provider(s) for a particular service group. For example, the service group migration and/or optimization user interface may display a historical view of the changes in price over time for the different cloud service providers being considered for the migration of a particular service group. In some embodiments, the historical view may comprise a line graph, bar chart, or other type of graph that may provide a trend line, e.g., indicating an expected average price for the hosting of a particular service group by a particular cloud service provider(s).

At least one embodiment is disclosed and variations, combinations, and/or modifications of the embodiment(s) and/or features of the embodiment(s) made by a person having ordinary skill in the art are within the scope of the disclosure. Alternative embodiments that result from combining, integrating, and/or omitting features of the embodiment(s) are also within the scope of the disclosure. Where numerical ranges or limitations are expressly stated, such express ranges or limitations may be understood to include iterative ranges or limitations of like magnitude falling within the expressly stated ranges or limitations (e.g., from about 1 to about 10 includes 2, 3, 4, etc.; greater than 0.10 includes 0.11, 0.12, 0.13, etc.). The use of the term "about" means ±10% of the subsequent number, unless otherwise stated.

Use of the term "optionally" with respect to any element of a claim means that the element is required, or alternatively, the element is not required, both alternatives being within the scope of the claim. Use of broader terms such as comprises, includes, and having may be understood to provide support for narrower terms such as consisting of, consisting essentially of, and comprised substantially of. Accordingly, the scope of protection is not limited by the description set out above but is defined by the claims that follow, that scope including all equivalents of the subject matter of the claims. Each and every claim is incorporated as further disclosure into the specification and the claims are embodiment(s) of the present disclosure.

It is to be understood that the above description is intended to be illustrative and not restrictive. For example, the above-described embodiments may be used in combination with each other. Many other embodiments will be apparent to those of skill in the art upon reviewing the above description. The scope of the invention therefore should be determined with reference to the appended claims, along with the full scope of equivalents to which such claims are entitled. It should be noted that the discussion of any reference is not an admission that it is prior art to the present invention, especially any reference that may have a publication date after the priority date of this application.

### CLAUSES SETTING OUT FURTHER ASPECTS AND EMBODIMENTS

A1. A non-transitory computer-readable medium, having stored thereon program instructions that, upon execution by a computing system, cause the computing system to perform operations comprising: identifying a first service group operated by an enterprise, wherein the first service group comprises: at least one or more applications and one or more hosts configured to offer a service to the enterprise; evaluating the identified first service group for cloud migration, wherein the evaluation comprises causing the computing system to perform at least the following operations: determining a current allocation efficiency score for the first service group; obtaining allocation efficiency score estimates for one or more cloud service providers, wherein the obtained allocation efficiency score estimates correspond to the determined current allocation efficiency score for the first service group; and recommending a migration of the first service group to at least one of the one or more cloud service providers for which allocation efficiency score estimates were obtained; receiving a selection of at least one of the recommended one or more cloud service providers; and migrating the first service group to be hosted by the selected at least one of the recommended one or more cloud service providers.
A2. The non-transitory computer-readable medium of clause A1, wherein the instructions further cause the computing system to perform operations comprising: optimizing the hosting of the first service group by the selected at least one of the recommended one or more cloud service providers.
A3. The non-transitory computer-readable medium of clause A2, wherein the optimizing of the first service group further comprises causing the computing system to perform at least the following operation: migrating the first service group from being hosted by a single cloud service provider to being hosted by two or more cloud service providers.
A4. The non-transitory computer-readable medium of clause A1, wherein evaluating the identified first service group for cloud migration further comprises causing the computing system to perform at least the following operation: determining a migration likelihood score for the first service group.
A5. The non-transitory computer-readable medium of clause A1, wherein identifying a first service group further comprises causing the computing system to perform at least the following operation: identifying a first service group at the enterprise that has been identified to be operating as a statistically significant outlier based on at least a first operational metric.
A6. The non-transitory computer-readable medium of clause A1, wherein recommending a migration of the first service group to at least one of the one or more cloud service providers further comprises causing the computing system to perform at least the following operation: using of a collaborative filtering process to determine which cloud service provider of the one or more cloud service providers to recommend.
A7. The non-transitory computer-readable medium of clause A1, wherein identifying a first service group further comprises causing the computing system to perform at least the following operations: identifying a first plurality of candidate service groups operated by the enterprise for cloud migration; determining a migration likelihood score for each of the first plurality of candidate service groups; and identifying the first service group to be the candidate service group from the first plurality of candidate service groups having the highest migration likelihood score.
A8. The non-transitory computer-readable medium of clause A7, wherein the migration likelihood score of a respective candidate service group is based, at least in part, on at least one of: latency implications of migrating the respective candidate service group; security implications of migrating the respective candidate service group; the enterprise's historical usage of the respective candidate service group; and efficiency implications of migrating the respective candidate service group.
A9. A system comprising: a user interface; a non-transitory memory; and one or more hardware processors configured to execute instructions from the non-transitory memory to cause the one or more hardware processors to: identify a first service group operated by an enterprise, wherein the first service group comprises: at least one or more applications and one or more hosts configured to offer a service to the enterprise; evaluate the identified first service group for cloud migration, wherein the evaluation comprises causing the one or more hardware processors to perform at least the following operations: determining a current allocation efficiency score for the first service group; obtaining allocation efficiency score estimates for one or more cloud service providers, wherein the obtained allocation efficiency score estimates correspond to the determined current allocation efficiency score for the first service group; and recommending a migration of the first service group to at least one of the one or more cloud service providers for which allocation efficiency score estimates were obtained; receive, via the user interface, a selection of at least one of the recommended one or more cloud service providers; and migrate the first service group to be hosted by the selected at least one of the recommended one or more cloud service providers.
A10. The system of clause A9, wherein the instructions further cause the one or more hardware processors to: optimize the hosting of the first service group by the selected at least one of the recommended one or more cloud service providers.
A11. The system of clause A10, wherein the optimizing of the first service group further comprises causing the one or more hardware processors to: migrate the first service group from being hosted by a single cloud service provider to being hosted by two or more cloud service providers.
A12. The system of clause A9, wherein evaluating the identified first service group for cloud migration further comprises causing the one or more hardware processors to: determine a migration likelihood score for the first service group.
A13. The system of clause A9, wherein identifying a first service group further comprises causing the one or more hardware processors to: identify a first service group at the enterprise that has been identified to be operating as a statistically significant outlier based on at least a first operational metric.
A14. The system of clause A9, wherein recommending a migration of the first service group to at least one of the one or more cloud service providers further comprises causing the one or more hardware processors to: use a collaborative filtering process to determine which cloud service provider of the one or more cloud service providers to recommend.
A15. The system of clause A9, wherein identifying a first service group further comprises causing the one or more hardware processors to: identify a first plurality of candidate service groups operated by the enterprise for cloud migration; determine a migration likelihood score for each of the first plurality of candidate service groups; and identify the first service group to be the candidate service group from the first plurality of candidate service groups having the highest migration likelihood score.
A16. A method, comprising: identifying, with one or more processors, a first service group operated by an enterprise, wherein the first service group comprises: at least one or more applications and one or more hosts configured to offer a service to the enterprise; evaluating, with the one or more processors, the identified first service group for cloud migration, wherein the evaluation comprises causing the one or more processors to perform at least the following operations: determining a current allocation efficiency score for the first service group; determining a migration likelihood score for the first service group; obtaining allocation efficiency score estimates for one or more cloud service providers, wherein the obtained allocation efficiency score estimates correspond to the determined current allocation efficiency score for the first service group; and recommending a migration of the first service group to at least one of the one or more cloud service providers for which allocation efficiency score estimates were obtained; receiving, with the one or more processors, a selection of at least one of the recommended one or more cloud service providers; and migrating the first service group to be hosted by the selected at least one of the recommended one or more cloud service providers.
A17. The method of clause A16, further comprising: optimizing the hosting of the first service group by the selected at least one of the recommended one or more cloud service providers.
A18. The method of clause A17, wherein the optimizing of the first service group further comprises: migrating the first service group from being hosted by a single cloud service provider to being hosted by two or more cloud service providers.
A19. The method of clause A17, wherein the optimizing of the first service group further comprises: decommissioning at least one of the one or more hosts of the first service group.
A20. The method of clause A17, wherein the optimizing of the first service group further comprises: modifying an operational metric of at least one of the one or more hosts of the first service group.

## Claims

1. A non-transitory computer-readable medium, having stored thereon program instructions that, upon execution by a computing system, cause the computing system to perform operations comprising:
identifying a first service group operated by an enterprise, wherein the first service group comprises: at least one or more applications and one or more hosts configured to offer a service to the enterprise;
evaluating the identified first service group for cloud migration, wherein the evaluation comprises causing the computing system to perform at least the following operations:
determining a current allocation efficiency score for the first service group;
obtaining allocation efficiency score estimates for one or more cloud service providers, wherein the obtained allocation efficiency score estimates correspond to the determined current allocation efficiency score for the first service group; and
recommending a migration of the first service group to at least one of the one or more cloud service providers for which allocation efficiency score estimates were obtained;
receiving a selection of at least one of the recommended one or more cloud service providers; and
migrating the first service group to be hosted by the selected at least one of the recommended one or more cloud service providers.

2. The non-transitory computer-readable medium of claim 1, wherein evaluating the identified first service group for cloud migration further comprises causing the computing system to perform at least the following operation:
determining a migration likelihood score for the first service group.

3. The non-transitory computer-readable medium of claim 1, wherein identifying a first service group further comprises causing the computing system to perform at least the following operation:
identifying a first service group at the enterprise that has been identified to be operating as a statistically significant outlier based on at least a first operational metric.

4. The non-transitory computer-readable medium of claim 1, wherein recommending a migration of the first service group to at least one of the one or more cloud service providers further comprises causing the computing system to perform at least the following operation:
using of a collaborative filtering process to determine which cloud service provider of the one or more cloud service providers to recommend.

5. The non-transitory computer-readable medium of claim 1, wherein identifying a first service group further comprises causing the computing system to perform at least the following operations:
identifying a first plurality of candidate service groups operated by the enterprise for cloud migration;
determining a migration likelihood score for each of the first plurality of candidate service groups; and
identifying the first service group to be the candidate service group from the first plurality of candidate service groups having the highest migration likelihood score.

6. The non-transitory computer-readable medium of claim 5, wherein the migration likelihood score of a respective candidate service group is based, at least in part, on at least one of:
latency implications of migrating the respective candidate service group;
security implications of migrating the respective candidate service group;
the enterprise's historical usage of the respective candidate service group; and
efficiency implications of migrating the respective candidate service group.

7. A system comprising:
a user interface;
a non-transitory memory; and
one or more hardware processors configured to execute instructions from the non-transitory memory to cause the one or more hardware processors to:
identify a first service group operated by an enterprise, wherein the first service group comprises: at least one or more applications and one or more hosts configured to offer a service to the enterprise;
evaluate the identified first service group for cloud migration, wherein the evaluation comprises causing the one or more hardware processors to perform at least the following operations:
determining a current allocation efficiency score for the first service group;
obtaining allocation efficiency score estimates for one or more cloud service providers, wherein the obtained allocation efficiency score estimates correspond to the determined current allocation efficiency score for the first service group; and
recommending a migration of the first service group to at least one of the one or more cloud service providers for which allocation efficiency score estimates were obtained;
receive, via the user interface, a selection of at least one of the recommended one or more cloud service providers; and
migrate the first service group to be hosted by the selected at least one of the recommended one or more cloud service providers.

8. The system of claim 7, wherein identifying a first service group further comprises causing the one or more hardware processors to:
identify a first service group at the enterprise that has been identified to be operating as a statistically significant outlier based on at least a first operational metric.

9. The system of claim 7, wherein recommending a migration of the first service group to at least one of the one or more cloud service providers further comprises causing the one or more hardware processors to:
use a collaborative filtering process to determine which cloud service provider of the one or more cloud service providers to recommend.

10. The system of claim 7, wherein identifying a first service group further comprises causing the one or more hardware processors to:
identify a first plurality of candidate service groups operated by the enterprise for cloud migration;
determine a migration likelihood score for each of the first plurality of candidate service groups; and
identify the first service group to be the candidate service group from the first plurality of candidate service groups having the highest migration likelihood score.

11. A method, comprising:
identifying, with one or more processors, a first service group operated by an enterprise, wherein the first service group comprises: at least one or more applications and one or more hosts configured to offer a service to the enterprise;
evaluating, with the one or more processors, the identified first service group for cloud migration, wherein the evaluation comprises causing the one or more processors to perform at least the following operations:
determining a current allocation efficiency score for the first service group;
determining a migration likelihood score for the first service group;
obtaining allocation efficiency score estimates for one or more cloud service providers, wherein the obtained allocation efficiency score estimates correspond to the determined current allocation efficiency score for the first service group; and
recommending a migration of the first service group to at least one of the one or more cloud service providers for which allocation efficiency score estimates were obtained;
receiving, with the one or more processors, a selection of at least one of the recommended one or more cloud service providers; and
migrating the first service group to be hosted by the selected at least one of the recommended one or more cloud service providers.

12. The method of claim 11, further comprising:
optimizing the hosting of the first service group by the selected at least one of the recommended one or more cloud service providers.

13. The method of claim 12, wherein the optimizing of the first service group further comprises:
migrating the first service group from being hosted by a single cloud service provider to being hosted by two or more cloud service providers.

14. The method of claim 12, wherein the optimizing of the first service group further comprises:
decommissioning at least one of the one or more hosts of the first service group.

15. The method of claim 12, wherein the optimizing of the first service group further comprises:
modifying an operational metric of at least one of the one or more hosts of the first service group.
